# EUROPÄISCHE PATENTSCHRIFT

(11) **EP 3 177 471 B1**
(45) Veröffentlichungstag und Bekanntmachung des Hinweises auf die Patenterteilung: **28.03.2018**
(21) Anmeldenummer: 15757442.7
(22) Anmeldetag: 05.08.2015
(51) Int. Cl.: B60K 6/26, B60L 11/12

(54) **RANGE EXTENDER**
RANGE EXTENDER
PROLONGATEUR D'AUTONOMIE

(30) Priorität: 07.08.2014 DE 102014111254
(43) Veröffentlichungstag der Anmeldung: 14.06.2017
(73) Patentinhaber: Pierburg GmbH, 41460 Neuss (DE)
(72) Erfinder: HOPP, Martin, 50858 Köln (DE); DEMIR, Oguz, 74080 Heilbronn (DE); NIEHUES, Jürgen, 74831 Grundelsheim (DE)
(74) Vertreter: Patentanwälte ter Smitten Eberlein-Van Hoof Rütten Partnerschaftsgesellschaft mbB
(86) Internationale Anmeldenummer: PCT/EP2015/068083
(87) Internationale Veröffentlichungsnummer: WO 2016/020448

(56) Entgegenhaltungen:
- EP-A1- 2 308 708
- DE-A1-102010 034 443
- DE-A1-102011 119 195
- JP-A- 2014 001 671

## Beschreibung

Die Erfindung bezieht sich auf einen Range Extender für ein Landfahrzeug mit elektromotorischem Traktionsantrieb.

Ein Landfahrzeug mit einem elektromotorischen Traktionsantrieb wird auch Elektro-Auto genannt, und verfügt über einen oder mehrere Elektromotoren zum mechanischen Antrieb eines oder mehrerer Räder des Fahrzeugs. Die Energiezufuhr zu dem oder den elektrischen Antriebsmotoren erfolgt über Oberleitung, Brennstoffzelle oder über einen großen elektrischen Akkumulator. Akkumulatoren nach dem Stand der Technik haben jedoch einen relativ schlechten Wirkungsgrad gemessen an ihrem Gewicht und Volumen, so dass elektrische Landfahrzeuge, die ausschließlich über einen Akkumulator mit gespeicherter Energie versorgt werden, in der Praxis keine zufriedenstellenden Reichweiten aufweisen. Um die Reichweite zu erhöhen, bieten Landfahrzeug-Hersteller serienmäßig oder optional sogenannte Range Extender an, die technisch gesehen elektrische Generatoren sind, die durch einen relativ kleinen Verbrennungsmotor mechanisch angetrieben werden. Der für einen Range Extender zur Verfügung stehende Raum ist in der Regel knapp bemessen. Typische Einbauorte für einen Range Extender sind die Reserverad-Wanne, der Unterboden, der Motorraum oder andere zur Verfügung stehende Bauräume in dem Fahrzeug.

Range Extender nach dem Stand der Technik, wie er beispielsweise aus der gattungsgemäßen WO 2013/167267 A2 bekannt ist, weisen einen Hubkolben-Verbrennungsmotor mit einem oder zwei Zylindern auf, wobei die zweizylindrige Ausführung häufig als V-Motor ausgebildet ist. Über die Kurbelwelle wird ein elektrischer Generator mechanisch angetrieben, beispielsweise über ein Zahnrad-Getriebe oder einen Zahnriemen. Der Generator wird häufig seitlich neben dem Verbrennungsmotor angeordnet, um auf diese Weise eine flache Bauform des Range Extender zu ermöglichen. Der Verbrennungsmotor weist an seiner Unterseite eine Ölwannen-Öffnung auf, die durch eine unten liegende Ölwanne verschlossen ist. Ferner weist der Verbrennungsmotor eine Ölpumpe auf, die mechanisch oder elektrisch angetrieben ist, und das Öl aus der Ölwanne ansaugt und an die Lagerstellen pumpt. Der Rücklauf erfolgt drucklos durch die Schwerkraft nach unten in die Ölwanne. Das Öl im Zylinderkopf läuft dabei durch eine Ölablauföffnung in das Kurbelgehäuse und von dort in die Ölwanne.

Da der Ölablauf passiv und gravitations-unterstützt verläuft, sind Range Extender nach dem Stand der Technik entweder für den vertikal aufragenden Einbau oder für den horizontal liegenden Einbau konzipiert bzw. konstruiert.

Aus DD 40777 ist ein Verbrennungsmotor bekannt, der in zwei verschiedenen Einbaulagen verbaut werden kann.

Aufgabe der Erfindung ist es demgegenüber, einen Range Extender zu schaffen, der sowohl für den vertikalen als auch für den horizontalen Einbau geeignet ist.

Diese Aufgabe wird erfindungsgemäß gelöst mit den Merkmalen des Patentanspruches 1.

Der erfindungsgemäße Range Extender weist zwei Ölwannen-Öffnungen auf, die ungefähr rechtwinklig zueinander angeordnet sind und zwar eine Ölwannen-Öffnung, die bei vertikalem Einbau unten liegend und eine Ölwannen-Öffnung, die bei horizontalem Einbau unten liegend ist. Bei vertikaler Einbaulage des Range Extenders bzw. bei horizontaler Einbaulage des Range Extenders wird die jeweils unten liegende Ölwannen-Öffnung durch eine Ölwanne verschlossen, wohingegen die andere, ungefähr senkrecht hierzu orientierte seitliche Ölwannen-Öffnung durch einen Blinddeckel verschlossen ist. Der Saugeinlass der Ölpumpe befindet wird jeweils an den Boden der Ölwanne verlegt.

Der Verbrennungsmotor weist einen Motorblock auf, der eine Ölablaufleitung aufweist, die derart orientiert ist, dass sie sowohl in der vertikalen als auch in der horizontalen Einbaulage zur Horizontalen in Richtung Ölwanne geneigt ist. Hierbei kann es sich um eine einzige Ölablaufleitung handeln, oder aber alternativ auch um zwei oder mehrere Ablaufleitungen, die jeweils nur in einer Einbauorientierung zur Horizontalen in Richtung Ölwanne derart geneigt sind, dass das Öl in Richtung Kurbelgehäuse und Ölwanne schwerkraftgetrieben ablaufen kann. Alternativ kann jedoch auch eine einzige Ölablaufleitung derart orientiert vorgesehen sein, dass diese Ölablaufleitung sowohl in der vertikalen als auch in der horizontalen Einbaulage des Range Extenders entsprechend in Richtung Ölwanne geneigt ist. Hierdurch wird sichergestellt, dass das Öl in beiden Einbaulagen entsprechend in Richtung Ölwanne drucklos ablaufen kann.

Der auf diese Weise ausgestattete Range Extender kann vertikal aufragend eingebaut werden, also mit einer ungefähr horizontal ausgerichteten Kurbelwelle oder kann waagerecht liegend eingebaut werden, also mit ungefähr vertikal stehender Kurbelwelle. Der Blinddeckel ist bevorzugt nicht identisch mit der Ölwanne, und ragt bevorzugt von der Öffnungsebene der betreffenden Ölwannen-Öffnung weniger hervor, als die Ölwanne nach unten von der Öffnungsebene ihrer Ölwannen-Öffnung hervorragt. Auf diese Weise wird im Bereich der nicht genutzten Ölwannen-Öffnung der erforderliche Bauraum minimiert.

Der Verbrennungsmotor weist einen Zylinderkopf mit einer Ölablauföffnung auf, die in der vertikalen und in der horizontalen Einbaulage am tiefsten Punkt des Zylinderkopf-Hohlraums angeordnet ist. Unter dem tiefsten Punkt ist vorliegend der Punkt zu verstehen, der bezogen auf die Erd-Vertikale der tiefstliegende Punkt in dem Zylinderkopf ist. Die Ölablauföffnung kann als eine einzige Ölablauföffnung vorgesehen sein, die in beiden Einbauorientierungen am tiefsten Punkt des Zylinderkopf-Hohlraums angeordnet ist. Es können alternativ jedoch auch zwei oder mehr Ölablauföffnungen vorgesehen sein, wobei jeweils nicht alle Ölablauföffnungen entsprechend am tiefsten Punkt angeordnet sind. Die Ölablauföffnung bzw. Ölablauföffnungen sind bevorzugt fluidisch verbunden mit der Ölablaufleitung bzw. den Ölablaufleitungen in dem angrenzenden Motorblock.

Vorzugsweise ist die Innenwand des Zylinderkopf-Hohlraums derart ausgebildet, dass sie sowohl in der vertikalen als auch in der horizontalen Einbaulage zur Horizontalen in Richtung der Ölablauföffnung geneigt ist. Hierdurch wird sichergestellt, dass, insbesondere bei horizontaler Anordnung des Range Extenders, das Öl aus dem Zylinderkopf in Richtung Ölablauföffnung schwerkraftbedingt abläuft.

Gemäß einer bevorzugten Ausgestaltung ist die Ölpumpe elektrisch angetrieben. Die Ölpumpe kann auf diese Weise sehr nah an der Ölwanne montiert werden. Für die elektrische Ölpumpe können beispielsweise zwei verschiedene Anbau- bzw. Einbaupositionen vorgesehen sein, nämlich eine für die vertikale Einbaulage und eine für die horizontale Einbaulage.

Im Folgen wird ein Ausführungsbeispiel der Erfindung anhand der Zeichnungen näher erläutert. Es zeigen:
Fig. 1 einen Teilschnitt eines Range Extenders in vertikaler Einbaulage, und
Fig. 2 einen Längsschnitt des Range Extenders der Figur 1 in horizontaler Einbaulage.

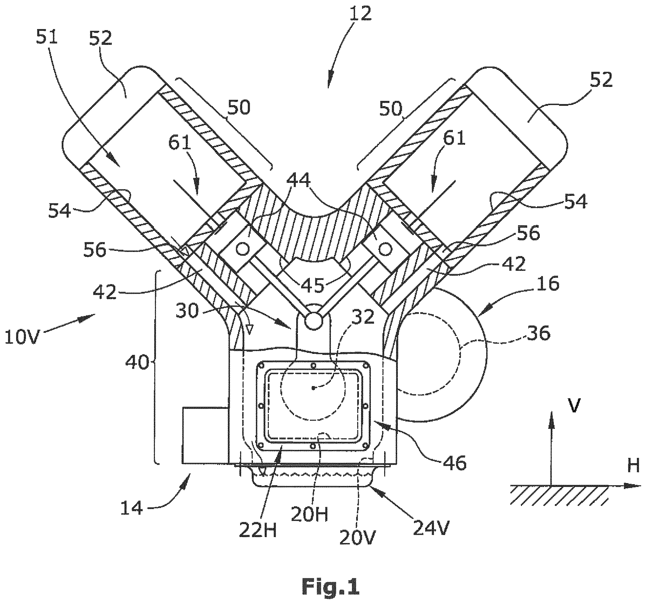

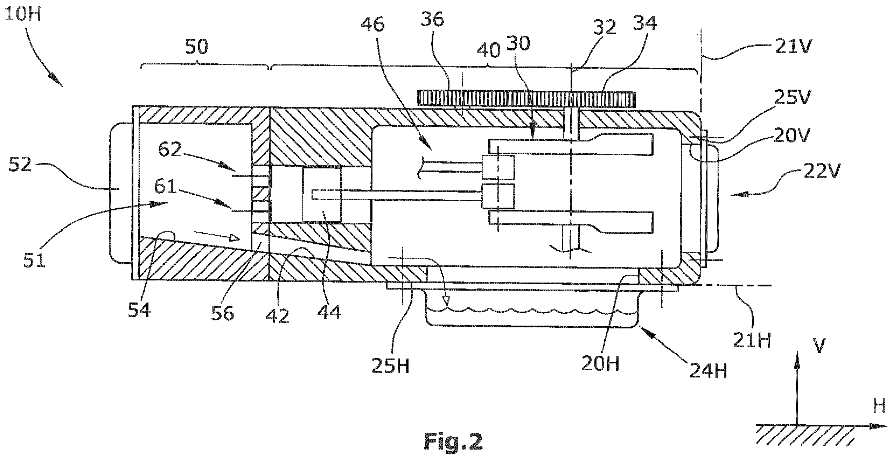

In den Figuren 1 und 2 ist ein Range Extender 10H, 10V für ein Landfahrzeug mit elektromotorischem Traktionsantrieb dargestellt. In der Figur 1 ist der Range Extender 10H stehend in vertikaler Einbaulage dargestellt, wohingegen der selbe Range Extender 10V in der Figur 2 in liegender horizontaler Einbaulorientierung dargestellt ist. Die Range Extender 10H, 10V der Figuren 1 und 2 sind im Wesentlichen identisch, der einzige Unterschied besteht in der Position einer Ölwanne 24V, 24H und eines Blinddeckels 22V, 22H an dem Range Extender 10H, 10V.

Der Range Extender 10H, 10V weist einen Hubkolben-Verbrennungsmotor 12 auf, der über Zahnräder 34, 36 einen elektrischen Generator 16 antreibt, der mit einem Fahrzeug-Akkumulator elektrisch verbunden ist. Wie in Figur 2 zu erkennen ist, ist der Range Extender 10H, 10V sehr flach aufgebaut, um in Fahrzeugen entsprechend platzsparend eingebaut werden zu können. Der Verbrennungsmotor 12 ist vorliegend als ZweiZylinder-V-Motor ausgebildet mit einem Zylinderwinkel von beispielsweise 90°, so dass die Kolben 44 sich in ca. 45° zur Vertikalen V bewegen, wenn der Range Extender 10V in seiner in Figur 1 dargestellten vertikalen Einbaulage angeordnet bzw. eingebaut ist. Die Kolben 44 laufen in entsprechenden Zylindern 45, die in einem Metall-Motorblock 40 entsprechend ungefähr rechtwinklig zueinander eingelassen sind.

Der Motorblock 40 bildet ferner ein Kurbelgehäuse 46, in dem die Kurbelwelle 30 drehbar gelagert ist. Die Kolben 44 treiben die Kurbelwelle 30 über entsprechende Pleuelstangen an. Die Kurbelwelle 30 ist drehfest mit dem Antriebs-Zahnrad 34 verbunden, das mit dem Abtriebs-Zahnrad 36 kämmt, das drehfest mit einem Rotor des Generators 16 verbunden ist. Die Kurbelwelle 30 definiert eine Drehachse 32, um die sich die Kurbelwelle 30 dreht. Die Drehachse 32 ist in der vertikalen Einbaulage parallel zur Horizontalen H und ist in der horizontalen Einbaulage senkrecht zu der Horizontalen H, also parallel zu der Vertikalen V.

An die Ölwanne 24 oder den Motorblock 40 ist eine elektrische Ölpumpe 14 angeflanscht, die das als Schmiermittel dienende Öl zu den Ölversorgungsstellen pumpt.

Auf die beiden Zylinder 45 des Motorblocks 40 ist jeweils ein Zylinderkopf 50 montiert, der jeweils ein Einlassventil 61 und ein Auslassventil 62 aufweist. Die beiden Zylinderköpfe 50 sind jeweils mit einem Zylinderkopfdeckel 52 verschlossen. Jeder Zylinderkopf 50 weist jeweils in einer Ecke eine Ölablauföffnung 56 auf, die ungefähr fluchtet mit einer entsprechend orientierten Ölablaufleitung des Motorblocks 40. Die Ölablauföffnung 56 ist derart in dem Zylinderkopf-Hohlraum 51 angeordnet und der Zylinderkopf-Hohlraum ist innenseitig derart ausgeformt, dass die Ölablauföffnung 56 in beiden Einbauorientierungen jeweils am tiefsten Punkt des Zylinderkopf-Hohlraums 51 angeordnet ist. Ferner ist die Ölablaufleitung 42 in dem Motorblock 40, die die Ölablauföffnung 56 mit dem Kurbelgehäuse 46 verbindet, derart geneigt, dass sie sowohl bei vertikaler Einbauorientierung als auch bei horizontaler Einbauorientierung mindestens 5°, besonders bevorzugt mindestens 10° geneigt ist zur Horizontalen H. Die Ölablaufleitung 42 ist also nicht exakt parallel zum Zylinder 45 angeordnet, sondern, wie in Fig. 2 dargestellt ist, bezogen auf die Querebene zur Drehachse 42, um mindestens 5° bis 10° geneigt zu dieser Querebene. Auf diese Weise ist sichergestellt, dass das in den jeweiligen Zylinderkopf-Hohlraum 51 durch die Ölpumpe 14 geförderte Öl alleine durch Schwerkraft aus dem Zylinderkopf-Hohlraum 51 in das Kurbelgehäuse 46 abläuft.

Hierzu weist der Zylinderkopf 50 an seiner Innenwand 54 eine Schräge auf, die insbesondere in der horizontalen Einbauorientierung für einen entsprechenden Ölablauf in Richtung der Ablauföffnung 56 sorgt.

Der Motorblock weist im Bereich des Kurbelgehäuses 46 zwei Ölwannen-Öffnungen 20V, 20H auf, wobei eine Öffnung 20V eine Öffnungsebene 21V aufweist, die parallel zur Kurbelwellen-Drehachse 32 ist, wobei die Öffnungsebene 21H der anderen Ölwannen-Öffnung 20H ungefähr senkrecht zur Kurbelwellen-Drehachse 32 angeordnet ist. Die beiden Ölwannen-Öffnungen 20H, 20V weisen außenseitig jeweils einen Öffnungs-Flansch 25H, 25V auf, der die Öffnungsebene 21H, 21V definiert. Beide Ölwannen-Öffnungen 20H, 20V fluchten ungefähr mit der Kurbelwelle 30, und zwar einmal unmittelbar mit der Drehachse 32 der Kurbelwelle und einmal senkrecht hierzu ungefähr mit den beiden Kolben 44 bzw. Zylindern 45.

In beiden Einbauorientierungen ist jeweils die, bezogen auf die Vertikale V untere Ölwannen-Öffnung 20H, 20V mit einer Ölwanne 24H, 24V verschlossen, während die jeweils andere Ölwannen-Öffnung 20V, 20H mit einem Blinddeckel 22V, 22H verschlossen ist, der weniger von seiner Öffnungsebene 21H, 21V emporragt als die Ölwanne 24H, 24V. Bei vertikaler Einbauorientierung, die in Fig. 1 dargestellt ist, ist die Ölwanne 24V an der Ölwannen-Öffnung 20V angeordnet, deren Öffnungsebene 21V ungefähr parallel zur Kurbelwellen-Drehachse 32 angeordnet ist, wohingegen der Blinddeckel 22H an der Öffnung 20H angeordnet ist, deren Öffnungsebene 21H ungefähr senkrecht zur Kurbelwellen-Drehachse 32 angeordnet ist. In der in Fig. 2 dargestellten horizontalen Einbauorientierung ist dies genau umgekehrt, das heißt die Ölwanne 24H ist an der Ölwannen-Öffnung 20H angeordnet, deren Öffnungsebene 21H senkrecht zur Kurbelwellen-Drehachse 32 steht, während der Blinddeckel 22V an der anderen Öffnung 20V fixiert ist.

Auf diese Weise ist ein Range Extender 10H, 10V geschaffen, der mit minimalem Aufwand an eine vertikale Einbauorientierung und alternativ an eine horizontale Einbauorientierung angepasst werden kann.

## Patentansprüche

1. Range Extender (10H,10V) für ein Landfahrzeug mit einem elektromotorischen Traktionsantrieb, mit
einem Hubkolben- Verbrennungsmotor (12),
einer Ölpumpe (14) zur Ölversorgung des Verbrennungsmotors (12), und
einem elektrischen Generator (16), der durch den Verbrennungsmotor (12) mechanisch angetrieben ist,
**dadurch gekennzeichnet, dass**
der Verbrennungsmotor (12) zwei Ölwannen-Öffnungen (20V,20H) aufweist, die ungefähr rechtwinklig zueinander angeordnet sind,
die untere Ölwannen-Öffnung (20H,20V) durch eine Ölwanne (24V,24H) und die andere Ölwannen-Öffnung (20V, 20H) durch einen Blinddeckel (22V, 22H) verschlossen ist, und
der Verbrennungsmotor (12) einen Motorblock (40) aufweist, der eine Ölablaufleitung (42) aufweist, die derart orientiert ist, dass sie sowohl in der vertikalen als auch in der horizontalen Einbauorientierung zur Horizontalen in Richtung Ölwanne (24V, 24H) geneigt ist.

2. Range Extender (10H,10V) nach Anspruch 1, wobei der Verbrennungsmotor (12) eine sich um eine Drehachse (32) drehende Kurbelwelle (30) aufweist, wobei die Öffnungsebene (21V) einer Ölwannen-Öffnung (20V) räumlich ungefähr parallel und die Öffnungsebene (21H) der anderen Ölwanne-Öffnung (20H) räumlich ungefähr senkrecht zu der Drehachse (32) angeordnet ist.

3. Range Extender (10H,10V) nach einem der vorangegangenen Ansprüche, wobei der Blinddeckel (22H,22V) von der Öffnungsebene (21 V, 21 H) weniger hervorragt als die Ölwanne (24H,24V).

4. Range Extender (10H,10V) nach einem der vorangegangenen Ansprüche, wobei der Verbrennungsmotor (12) einen Zylinderkopf (50) mit einer Ölablauföffnung (56) aufweist, die in der vertikalen und in der horizontalen Einbauorientierung am tiefsten Punkt des Zylinderkopf-Hohlraums (51) angeordnet ist.

5. Range Extender (10H,10V) nach einem der vorangegangenen Ansprüche, wobei die Innenwand (54) des Zylinderkopf-Hohlraums (51) derart ausgebildet ist, dass sie sowohl in der vertikalen als auch in der horizontalen Einbaulage zur Horizontalen in Richtung der Ölablauföffnung (56) geneigt ist.

6. Range Extender (10H,10V) nach einem der vorangegangenen Ansprüche, wobei die Ölpumpe (14) elektrisch angetrieben ist.

## Claims

1. Range extender (10H, 10V) for a land vehicle having an electromotive traction drive, comprising
an internal combustion piston engine (12),
an oil pump (14) for the oil supply of the internal combustion engine (12), and
an electric generator (16) mechanically driven by the internal combustion engine (12),
**characterized in that**
the internal combustion engine (12) has two oil pan openings (20V, 20H) arranged approximately at right angles relative to each other,
the lower oil pan opening (20V, 20H) is closed by an oil pan (24V, 24H) and the other oil pan opening (20V, 20H) is closed by a blind cover (22V, 22H), and
the internal combustion engine (12) has an engine block (40) having an oil discharge line (42) oriented such that it is inclined towards the oil pan (24V, 24H) both in the vertical and the horizontal installation direction with respect to the horizontal plane.

2. Range extender (10H, 10V) of claim 1, wherein the internal combustion engine (12) has a crankshaft (30) rotating about a rotary axis (32), wherein the opening plane (21V) of one oil pan opening (20V) is spatially arranged approximately parallel to the rotary axis (30) and the opening plane (21H) of the other oil pan opening (2oH) is spatially arranged approximately vertically to said axis.

3. Range extender (10H, 10V) of one of the preceding claims, wherein the blind cover (22H, 22V) protrudes less from the opening plane (21V, 21H) than the oil pan (24H, 24V).

4. Range extender (10H, 10V) of one of the preceding claims, wherein the internal combustion engine (12) has a cylinder head (50) with an oil discharge opening (56) which, in the vertical and the horizontal installation direction, is arranged at the lowest point of the cylinder head cavity (51).

5. Range extender (10H, 10V) of one of the preceding claims, wherein the inner wall (54) of the cylinder head cavity (51) is formed such that it is inclined towards the oil discharge opening (56) both in the vertical and the horizontal installation direction with respect to the horizontal plane.

6. Range extender (10H, 10V) of one of the preceding claims, wherein the oil pump (14) is driven electrically.

## Revendications

1. Prolongateur d'autonomie (10H, 10V) pour un véhicule terrestre avec un entrainement de traction électromoteur, comprenant
un moteur à piston à combustion interne (12),
une pompe à huile (14) pour l'alimentation en huile du moteur à combustion interne (12), et
un générateur électrique (16) entrainé mécaniquement par ledit moteur à combustion interne (12),
**caractérisé en ce que**
ledit moteur à combustion interne (12) comprend deux ouvertures de carter d'huile (20H, 20V) disposées approximativement à angle droit l'une par rapport à l'autre,
l'ouverture de carter d'huile (20H, 20V) basse est fermée par un carter d'huile (24V, 24H) et l'autre ouverture de carter d'huile (20V, 20H) est fermée par un faux couvercle (22V, 22H), et
ledit moteur à combustion interne (12) comprend un bloc-moteur (40) comprenant une conduite de décharge d'huile (42) orientée de sorte qu'elle soit inclinée vers le carter d'huile (24V, 24H) soit dans la direction de montage verticale, soit dans la direction de montage horizontale par rapport au plan horizontal.

2. Prolongateur d'autonomie (10H, 10V) selon la revendication 1, dans lequel ledit moteur à combustion interne (12) comprend un vilebrequin (30) tournant autour un axe de rotation (32), le plan d'ouverture (21V) d'une ouverture de carter d'huile (20V) étant disposée dans l'espace de manière approximativement parallèle à l'axe de rotation (32) et l'autre ouverture de carter d'huile (20H) étant disposée dans l'espace de manière approximativement perpendiculaire à cet axe.

3. Prolongateur d'autonomie (10H, 10V) selon l'une quelconque des revendications précédentes, dans lequel le faux couvercle (22H, 22V) saille du plan de l'ouverture (21V, 21H) moins que le carter d'huile (24H, 24V).

4. Prolongateur d'autonomie (10H, 10V) selon l'une quelconque des revendications précédentes, dans lequel ledit moteur à combustion interne (12) comprend une tête de cylindre (50) avec une ouverture de décharge d'huile (56) qui, soit dans la direction de montage verticale, soit dans la direction de montage horizontale, est disposée à la position la plus basse dans la cavité de la tête de cylindre (51).

5. Prolongateur d'autonomie (10H, 10V) selon l'une quelconque des revendications précédentes, dans lequel la paroi intérieure (54) de la cavité de la tête de cylindre (51) est formée d'une manière qu'elle soit inclinée vers l'ouverture de décharge d'huile (56) soit dans la direction de montage verticale, soit dans la direction de montage horizontale par rapport au plan horizontal.

6. Prolongateur d'autonomie (10H, 10V) selon l'une quelconque des revendications précédentes, dans lequel la pompe d'huile (14) est entrainée électriquement.
